# EUROPEAN PATENT APPLICATION

(11) **EP 0 738 068 A2**
(43) Date of publication of application: **16.10.1996**
(21) Application number: 96302404.7
(22) Date of filing: 03.04.1996
(51) Int. Cl.: H04N 1/034, H04N 1/191, H04N 1/40

(54) **Random printing techniques for liquid ink printers**

(30) Priority: 03.04.1995 US 415898
(71) Applicant: XEROX CORPORATION, Rochester New York 14644 (US)
(72) Inventor: Torpey, Peter A., Webster, NY 14580 (US); Dewar, Vaughan L., Bartlett, TN 38133 (US)
(74) Representative: Johnson, Reginald George

(57) **Abstract**

Random printing techniques for liquid ink printers include forming masks in a random mask buffer (70) having randomly generated ON values which are ANDed by an AND circuit (74) with the information to be printed in a swath buffer (64). The randomness of the masks improves printing quality and reduces printhead signature problems resulting from printhead defects including misdirected or inoperative nozzles or jets. Masks wherein the ON values are generated with a 50% probability require two masks to print each and pixel location. Masks having the ON values generated with a 25% probability require four masks. Partial advance of the recording medium for overlapping adjacent swaths of scanning carriage type printer is possible to further improve printing by reducing printhead signature defects and "banding".

## Description

The present invention relates generally to a method of liquid ink recording and, more particularly, relates to random printing techniques for drop-on-demand type liquid ink printers.

An ink jet printhead may be incorporated into either a carriage type printer, a partial width array type printer, or a page-width type printer. The carriage type printer typically has a relatively small printhead containing the ink channels and nozzles. The printhead can be sealingly attached to a disposable ink supply cartridge and the combined printhead and cartridge assembly is attached to a carriage which is reciprocated to print one swath of information at a time, on a stationary recording medium, such as paper or a transparency. The height of the printed swath is equal to the length of the column of nozzles in the printhead. After the swath is printed, the paper is stepped a distance equal to the height of the printed swath or a portion thereof, so that the next printed swath is contiguous or overlapping therewith. This procedure is repeated until the entire page is printed. In contrast, a page width printer includes a stationary printhead having a length sufficient to print across the width or length of a sheet of recording medium at a time. The recording medium is continually moved past the page width printhead in a direction substantially normal to the printhead length and at a constant or varying speed during the printing process.

Printers typically print information received from an image output device such as a personal computer. Typically, this received information is in the form of a raster scan image such as a full page bitmap or in the form of an image written in a page description language. The raster scan image includes a series of scan lines consisting of bits representing pixel information in which each scan line contains information sufficient to print a single line of information across a page in a linear fashion. Printers can print bitmap information as received. If a printer receives an image written in the page description language, however, the printer converts the page description language to a bitmap consisting of pixel information.

Typically, the density of information contained in the full page bitmap will correspond to the density of the image to be printed by the liquid ink printer. For instance, in a thermal ink jet printhead printing at 300 spots per inch, the full page bitmap will have information enabling the printhead to print at the required density.

In reciprocating carriage printers, image defects can occur due to inadequate drying time of the ink. These image defects can be reduced by printing the image in more than one pass of the printhead, wherein each pass prints a portion of the pixels in a dot pattern known as a "checkerboard" pattern. In this type of multiple pass printing, a first pass of the printhead carriage prints a swath of information in which odd numbered pixels of odd numbered rows and even numbered pixels of even numbered rows of a bitmap are printed. In a second pass of the carriage printhead, the complementary pattern consisting of even numbered pixels in odd numbered rows and odd numbered pixels in even numbered rows is printed. By printing in two passes, the ink printed in the first pass has time to dry before the ink from the second pattern is deposited. Printing in multiple passes can, however, produce a print defect known as "banding". Banding is the phenomenon which results from printing one swath of information next to another swath of information such that no overlap of adjacent swaths occurs and a line or band is apparent between adjacent swaths.

To reduce or prevent banding, checkerboard patterns are typically printed in a plurality of overlapping swaths. While conventional checkerboarding can reduce image defects and overlapping of checkerboard swaths can reduce or eliminate banding image defects, further improvements are desirable since complete or partial overlapping of checkerboard patterns may not reduce image defects to a desirable level.

US-A-4,999,646 describes a multiple pass complementary dot pattern ink jet printing process. Successive printed swaths of information are made by depositing a first dot pattern and a second partially overlapping complementary dot pattern on the print media. The adjacent spacing of dots is alternated in coincident dot rows and the first and second dot patterns are overlapped by a predetermined percentage which is less than 100%.

Japanese Laid-Open No. 60-107975 describes an ink jet recording apparatus having a recording head scanning in a lateral direction wherein a first main scan and a second main scan overlap. The array of print dots in the overlapping area are printed only once. The dots within the array of dots are printed by either the first main scan or the second main scan wherein odd rows of the overlapping area are printed by the first scan and even rows are printed by the second scan, every other column of the odds rows and the other columns of the even rows are printed by the first scan and remaining dots are printed by the second scan, or the overlapping area is elected at random to be printed by the first main scan or the second main scan.

In accordance with one aspect of the present invention, there is provided a method of printing an image on a recording medium with a liquid ink printhead ejecting ink on the recording medium to form images including dots. The method includes the steps of selecting a first plurality of dots to be deposited on the recording medium according to a random selection process applied to bits of the image, depositing the first plurality of dots on the recording medium, and depositing a second plurality of dots, not selected to be deposited in said first selecting step, on the recording medium.

In accordance with another aspect of the present invention, there is provided a method of printing with a liquid ink printhead ejecting ink on a recording medium to form an image printed in multiple swaths including dots. The method includes the steps of selecting a number of swaths for printing the image, randomly selecting a first plurality of dots to be deposited on the recording medium according to a probability of selection as a function of the number of swaths, and depositing the first plurality of dots on the recording medium.

The present invention will now be described by way of example with reference to the accompanying drawings, in which:

FIG. 1 illustrates a block diagram of an electronic circuit for an ink jet printer having a pixel selecting circuit for randomly selecting pixels to be printed in a plurality of swaths.

FIG. 2 illustrates pixel locations masked with a random mask and a complementary mask wherein individual ON values are selected randomly to print a swath of information.

FIG. 3 illustrates the printing of first, second, and third swaths of overlapping information.

FIG. 4 illustrates pixel locations masked with four masks wherein the ON values are randomly selected with a 25% probability.

FIG. 5 illustrates a single mask having four submasks wherein the ON values in each submask are randomly selected with a 25% probability.

FIG. 6 illustrates a partial perspective view of a printer having a plurality of partial width array printheads and a pagewidth printbar for ink jet printing.

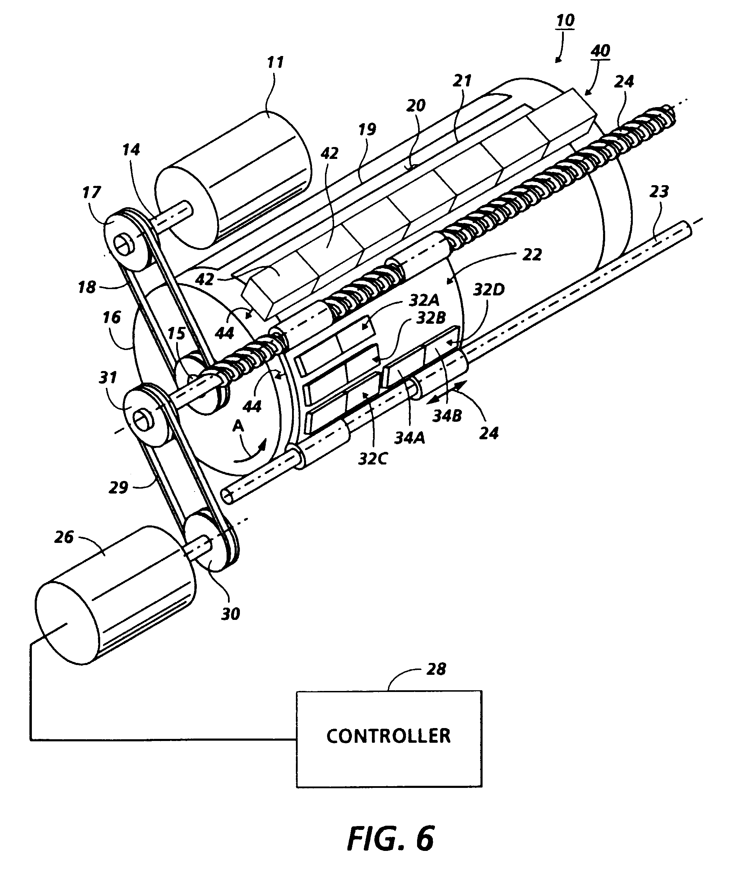

FIG. 6 illustrates the essential components of a printing apparatus, generally designated 10, in which the outside covers or case and associated supporting components of the printing apparatus are omitted for clarity. The printing apparatus 10 includes a motor 11 connected to a suitable power supply (not shown) and arranged with an output shaft 14 parallel to an axis 15 of a cylindrical drum 16 which is supported for rotation on bearings (not shown). A pulley 17 permits direct engagement of the output shaft 14, to a drive belt 18 for enabling the drum 16 to be continuously rotationally driven by the motor 11 in the direction of an arrow A at a predetermined rotational speed.

A recording medium 19, such as a sheet of paper or a transparency, is placed over an outer surface 20 of the drum 16, with a leading edge 21 attached to the surface 20 before printing to enable attachment of the sheet thereto either through the application of a vacuum through holes in the drum 16 (not shown) or through other means of holding such as electrostatic. As the drum 16 rotates, the sheet of paper 19 is moved past a printhead carriage 22 supported by a lead screw 24 arranged with the axis thereof parallel to the axis 15 of the drum 16 and supported by fixed bearings (not shown) which enable the carriage 22 to slidably translate axially. A carriage rail 23 provides further support for the carriage as the carriage moves in the direction of arrow 24 perpendicular to the moving direction of the sheet 21. A second motor 26, controlled by a controller 28, drives the lead screw with a second belt 29 connecting a clutch 30 and a clutch 31 attached to the lead screw 24 for movement thereof.

The printhead carriage 22 advances a first partial width array printbar 32A, a second partial width array printbar 32B, a third partial width array printbar 32C, and a fourth partial width array printbar 32D in the direction of arrow 24 for printing on the sheet 19. The first, second and third partial width array printbars 32A-C, respectively, each print one of the colors cyan, magenta or yellow for color printing. The fourth partial width array printbar 32D prints black when necessary, especially when printing graphics.

Each individual printbar 32A-32D include a first printhead die 34A and a second printhead die 34B butted together and mounted on a substrate (not shown) which can be made of a material such as graphite or metal. Each of the printhead dies 34A and 34B include several hundred or more nozzles which are fired sequentially in a bank of nozzles. All of the printhead die are fired in parallel for one full printing of all the partial width array printbars 32A-32D on the carriage 22.

In addition to the partial width array printbars, the printer 10 includes a full-width array or pagewidth printbar 40 supported by an appropriate support structure (not shown)above the drum 16 for printing on the recording medium 19. The pagewidth printbar 40 has a length sufficient to print across the entire width (or length ) of the recording medium during a single pass of the recording medium beneath the printbar. The printbar 40 includes a plurality of printhead subunits 42 affixed to a supporting substrate (not shown) in an abutted fashion, as taught by US-A-5,198,054. Alternatively, individual subunits 42 may be spaced from one another by a distance approximately equal to the length of a single subunit and bonded to opposing surfaces of the supporting substrate.

The forward facing edges of the printhead die 34A,34B and the subunits 42 contain ink droplet ejecting orifices or nozzles (not shown) which eject ink along a trajectory 44 substantially perpendicular to the surface of the recording medium 19. Printed wiring boards (not shown) contain circuitry required to interface and cause the individual heating elements (not shown) in the die and subunits to eject ink droplets from the nozzles. While not shown in FIG. 6, the printed wiring boards are connected to individual contacts contained on the die and subunits via a commonly known wire bonding technique. The data required to drive the individual heating elements of the printhead subunits is supplied from an external system by a standard printer interface, modified and/or buffered by a printer micro processor (not shown) within the printer and transferred to the printheads by ribbon cables (not shown) attached thereto.

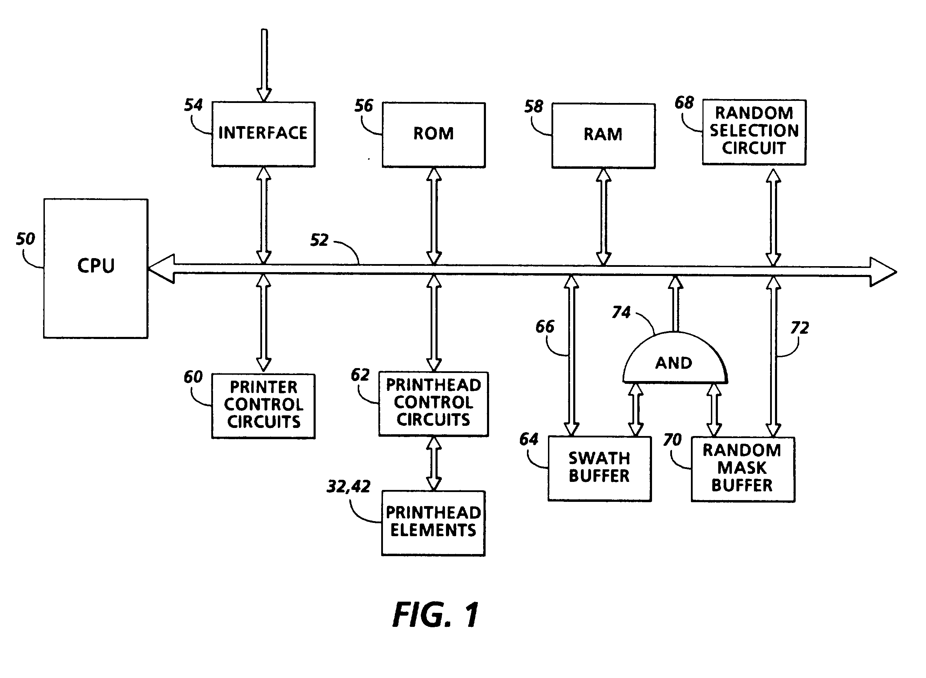

Referring to FIG. 1, there is shown a schematic block diagram of the electronic circuitry of the ink-jet printer 10 incorporating the present invention. A central processing unit or CPU 50 is connected through a bus 52 to an interface 54 which, in turn, is connected to an external device such as a host computer (not shown). The host computer provides information in the form of a bitmapped image or page description language to the printer for printing. The CPU 50 is also connected to a read only memory (ROM) 56 which includes an operating program for the CPU 50. A random access memory (RAM) 58 connected to the bus 52 includes accessible memory including print buffers for the manipulation of data and for the storage of printing information in the form of bitmaps received from the host computer. In addition to the ROM 56 and the RAM 58, various printer control circuits 60 are also connected to the bus 52 for operation of the printing apparatus which includes paper feed driver circuits as is known by those skilled in the art.

The CPU 50 is coupled to one or more printhead control circuits 62 through the bus 52. The printhead control circuits receive information over the bus 52 for controlling printhead elements 32 or 42 illustrated in FIG. 6. The printhead element 32 or 42 are controlled by the CPU 50 according to the content of signals received over the bus 52 and sent through the printhead control circuit 62 which controls selected ejection of inks from the nozzles of the printhead element 32 or 42.

As further illustrated in FIG. 1, the present invention includes a swath buffer 64 connected to the bus 52 through a swath bus 66. The swath buffer 64 stores the printing information necessary to print a single swath of information. For the printbars 32, a swath of information is equivalent to the width of the partial width array, while for the printbar 42, the swath is equivalent to length of the linear array of nozzles. The swath buffer 64 stores a swath of the bitmap stored in the RAM 58 having a width equal to the length of the linear array of nozzles contained in the printheads and a length equal to the length of a page of the bitmap information. Other sizes of swath buffers are also possible. For color printing, the swath buffer 64 might include one swath of a single color such as magenta, cyan, or yellow. It is also possible that the swath buffer 64 would include a plurality of swath buffers wherein each of the buffers stores a swath of information corresponding to each color plane of the previously recited colors. It is also possible that the swath buffers 64 could be defined in the RAM 58.

It has been shown that printing with liquid ink printers is improved when a single swath of information is printed in more than one pass of the printhead carriage across a page. When printing in multiple passes, a pattern known as a "checkerboard" pattern is deposited in a first pass of the printhead carriage. In a second pass, the complementary checkerboard pattern is deposited.

While checkerboard patterns have been shown to improve the quality of printing formed by dot matrix printers or liquid ink printers, such methods of printing can still produce printing defects since the checkerboard pattern consists of a repetitive pattern of dots placed in predetermined locations. Consequently, should one or more of the ink jet nozzles in a printhead be either non-functioning or defective such that ink is expelled along an incorrect trajectory or the spot size is non-uniform, multiple-pass checkerboard printing can still produce noticeable image defects. The present invention, however, improves printing by randomly selecting when a dot in a printed image is printed. Consequently, the present invention includes a random selection circuit 68 and a random mask buffer 70 coupled to the bus 52 through a mask bus 72. The random selection circuit 68 examines each bit location in the bitmap, and randomly determines or selects whether the bit should be on or off, and generates a "random mask". The random mask buffer 70 stores the randomly generated mask consisting of ON values and OFF values corresponding to pixel locations in the bitmaps. The randomly generated mask is ANDed by AND circuit 74 with swath information contained in the swath buffer for printing an image. By printing with the randomly generated mask, the visual impact of printhead signatures is reduced.

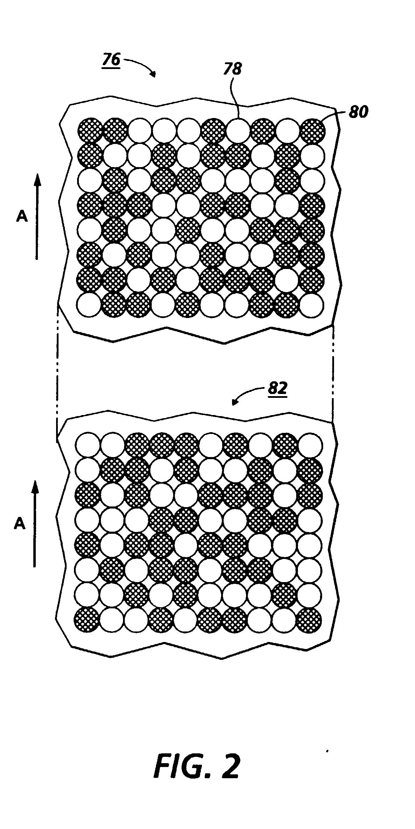

FIG. 2 illustrates a single swath of information equivalent to a portion of the bitmapped image to be printed by two passes of the partial width array or the pagewidth printhead. For purposes of illustration, ten rows and eight columns of the single swath of information are illustrated. Typically, however, printheads can have one hundred or more nozzles and printing swaths would therefore be much larger. To effect the random printing process of the present invention, a random mask is stored in the random mask buffer 70 which has been generated by random selection circuit 68, by the CPU 50 programmed therefore, or which has been previously generated and stored in the RAM 58. To generate a mask, a random number generator is applied to every pixel location of a swath of information to determine in which pass the pixel at the selected location is to be printed. If, for instance, a 50% probability is selected, the random number generator might generate a number between zero and one. If the number is less than one-half, the mask value at the selected location would be OFF and if the number is greater than or equal to one-half, the mask value at the selected location would be ON.

If printing is performed in two passes, either by the recording medium passing by a stationary printhead, or by a traveling printhead passing by a stationary recording medium, every bit in the bitmap corresponding to the swath of information can be selected to be either printed or not printed with a 50% probability. Consequently, a first swath 76 has individual pixels 78 (shown as circles) randomly selected to be printed as pixels 80 (shown as black circles) to be printed during a first pass of the recording sheet. A second swath 82 has the remaining pixels selected to be printed in a second pass. As illustrated in FIG. 2, the black circles indicate that those particular bit locations have been selected to be turned ON in the mask and consequently when printing a swath of information in a first pass, the pixel at that location of the bitmap is printed. In the second printing pass, the complementary mask is applied to the bitmap such that the bits not previously printed are now printed as shown by the second swath 82. The two masks comprise a mask set.

The random mask and the complement of the random mask of FIG. 2, for a single swath of information, are stored in the random mask buffer 70. The information stored in the swath buffer 64 is ANDed with the random mask by the AND circuit 74 and placed on the bus 52 for transmission to the printhead control circuit 62 which controls the printhead elements for printing the first swath 76. In a second pass of the printhead carriage, the complement of the random mask stored in the random mask buffer 70 is ANDed by the AND circuit 74 with the swath previously stored in the swath buffer 64 which is then transmitted to the bus 52 for printing as the second swath 82 by the printhead elements.

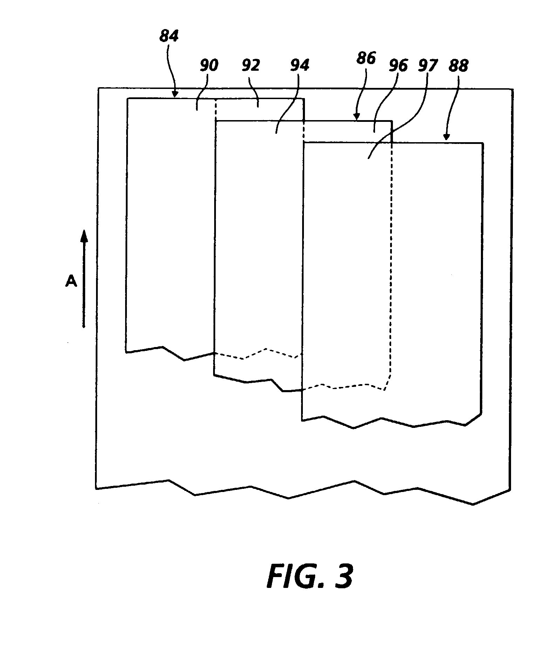

While it is possible to print a first swath of randomly selected dots on a recording medium and to cover the first swath completely with a second swath of the complementary dots, printing quality is improved in the case of partial width printheads or scanning carriage type printheads when the second complementary swath overlaps the first swath by a percentage, such as 50%, as illustrated in FIG. 3, where a plurality of swaths of information are printed in which each one overlaps an adjacent swath by 50%.

To realize the present invention when printing overlapping swaths of 50% probability, a first swath 84 is printed. A second swath 86 completes 100% coverage of a second portion 92 of the first printed swath 84 with a first portion 94 of the second swath 86 overlaying the second portion 92. During printing of the second swath 86, 100% of the nozzles in the printhead are fired. A third swath 88 then covers a second portion 96 of the second swath 86 such that the second portion 96 of the second swath 86 and a first portion 97 of the third swath 88 complete 100% coverage of second portion of the second swath.

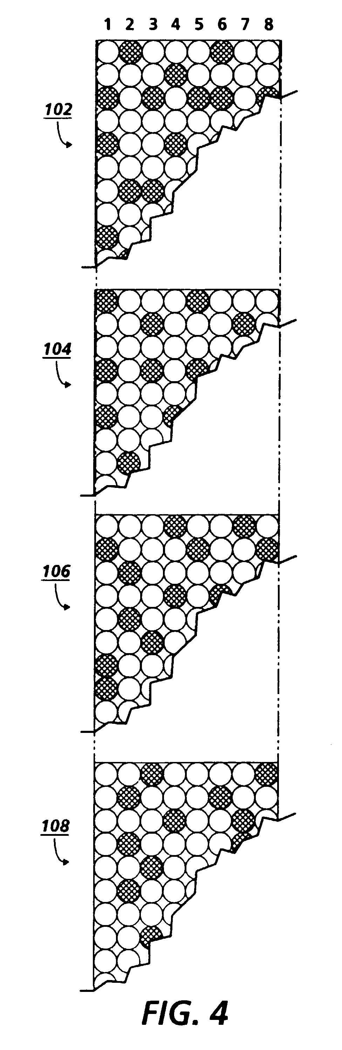

FIG. 4 illustrates a portion of four pixel locations printed with masks each having a 25% random probability of having the values within each of the masks turned ON. To effectively print a swath of information on the recording sheet 19, four passes of the printhead must be made across the recording sheet to complete 100% coverage. To accomplish 100% coverage in a four pass system using randomly generated masks, a random number generator repetitively picks a number from one to four to determine if, for a particular pixel location within each of the four masks, the pixel should be ON in the first mask 102, ON in a second mask 104, ON in a third mask 106, or ON in a fourth mask 108. The printed image is then generated as before by ANDing the swath to be printed with the appropriate mask.

While FIG. 4 illustrates four pass printing of a single swath of information, FIG. 4 also shows 100% overlap. If, however, improved printing is desired, for instance, in situations where images being printed include contiguous information having a width wider than the length of a single swath of the printhead, then partial advance of the printhead or recording medium is desirable. The masks of FIG. 4 can be used for partial advance printing, but attention must be paid to which portions of the swath have been previously printed and which portions are being overprinted.

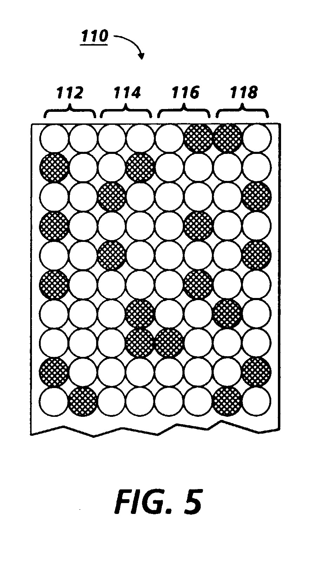

An alternative to generating four masks is illustrated in FIG.5 wherein a single mask 110, having a width equivalent to the length of the nozzle array (eight pixels shown for illustration) and a length equal to the length of a page of bitmap information (the complete length not being illustrated), is divided into four submasks, a first submask 112, a second submask 114, a third submask 116 and a fourth submask 118, each consisting of two columns. Since four submasks complete 100% coverage, only two pixels within each row of the mask 110 is selected to be ON. One pixel is turned ON in the first column of each row of one of the four submasks and one pixel is turned ON in the second column of each row of one of the four submasks. The random number generator generates a number of one to four to select which one of the four submasks will have the appropriate pixel turned ON within the first or second column. While this alternative provides a random mask structure having fewer ON values, and therefore may be less random when compared to the masks of FIG. 4, a reduction in print quality, if any, may not be noticeable depending on the number of nozzles printed at a time and the printing density.

The present invention is applicable to multiple pass printing using any number of passes to complete adequate coverage of the recording medium. The probability of selecting whether or not to turn on a pixel within a single printing can be selected as a function of the number of printing passes to complete an image or a portion of the image. For instance, if three passes are being printed to complete the necessary coverage, then the percentage probability of selection can be 33%. Likewise, five pass printing would use a percentage probability of selection of 20%. Consequently, the probability of selection is equal to the reciprocal of the number of passes.

Thus, there has been described random printing techniques for liquid ink printing which improves printing by breaking up structured defects which result from printhead signature patterns. It is therefore apparent that there has been provided in accordance with the present invention, a randomly generated mask for use in liquid ink printers, including thermal ink jet and piezoelectric printers. While the present invention has been described in conjunction with a specific embodiment thereof, the present invention is equally applicable to both monochrome printing as well as color printing. Likewise, the present invention is not limited to pagewidth or partial array printheads but is also applicable to scanning carriage type printers. In addition, the present invention is equally applicable to pagewidth printbars which are movable from side to side to enable overlapping printing.

## Claims

1. A method of printing an image on a recording medium (19) with a liquid ink printing apparatus (10) ejecting ink on the recording medium to form images comprising dots (78) of ink, the method comprising the steps of:
selecting a first plurality of dots (80) to be deposited on the recording medium according to a random selection process applied to bits of the image;
depositing the first plurality of dots (80) on the recording medium during a first printed swath (76); and
depositing a second plurality of dots, not selected to be deposited in said first selecting step, on the recording medium during a second printed swath (82).

2. The method of printing of claim 1, wherein said selecting step comprises generating a mask including a plurality of randomly selected ON values wherein the randomly selected ON values correspond to the first plurality of dots; and wherein the randomly selected ON values of the mask are ANDed by an AND circuit (74) with the image in a swath buffer (64) to select the first plurality of dots.

3. The method of printing of claim 2, wherein said generating step comprises generating a mask including a plurality of randomly selected ON values having about a fifty percent probability of being ON.

4. The method of printing of claim 2, wherein said generating step comprises generating a mask including a plurality of randomly selected ON values having about a twenty-five percent probability of being ON.

5. The method of printing of claim 2, further comprising printing a portion of the image having a width substantially equivalent to the length of a linear array of nozzles in a printbar (32,40) of the printing apparatus.

6. The method of printing of claim 5, wherein said generating step further comprises generating a mask including a plurality of columns corresponding to the number of nozzles in the linear array of nozzles; or
wherein said generating step includes generating a single mask set (110) for printing the entire image; or
wherein said generating step includes generating a plurality of mask sets (102,104,106,108), wherein each of the plurality of mask sets corresponds to a printing swath of the liquid ink printbar.

7. A method of printing with a liquid ink printbar (32,40) ejecting ink on a recording medium (19) to form an image printed in multiple swaths (76,82) including dots, comprising the steps of:
selecting a number of swaths for printing the image;
randomly selecting a first plurality of dots (80) to be deposited on the recording medium according to a probability of selection as a function of the number of swaths;
depositing the first plurality of dots (80) on the recording medium; and
depositing a second plurality of dots, not selected to be deposited in said first selecting step, on the recording medium.

8. The method of claim 7, wherein said randomly selecting step comprises randomly selecting a first plurality of dots to be deposited on the recording medium according to a probability of selection equal to the reciprocal of the number of swaths.

9. The method of claims 7 or 8, further comprising generating a mask including a plurality of randomly selected ON values wherein the randomly selected ON values correspond to the first plurality of dots; and wherein the randomly selected ON values of the mask are ANDed by an AND circuit (74) with the image in a swath buffer (64) to select the first plurality of dots.

10. The method of claim 9, wherein said generating step comprises generating a mask including a plurality of randomly selected ON values having about a fifty percent probability or about a twenty-five percent probability of being ON.
